(19) Europäisches Patentamt
European Patent Office
Office européen des brevets

(11) **EP 2 145 720 A1**

(12) **EUROPÄISCHE PATENTANMELDUNG**

(43) Veröffentlichungstag:
20.01.2010 Patentblatt 2010/03

(51) Int Cl.:
*B23K 26/04* (2006.01)  *G01B 11/26* (2006.01)
*G01B 7/16* (2006.01)  *G01B 5/30* (2006.01)

(21) Anmeldenummer: 08405173.9

(22) Anmeldetag: 09.07.2008

(84) Benannte Vertragsstaaten:
AT BE BG CH CY CZ DE DK EE ES FI FR GB GR HR HU IE IS IT LI LT LU LV MC MT NL NO PL PT RO SE SI SK TR
Benannte Erstreckungsstaaten:
AL BA MK RS

(71) Anmelder: Bystronic Laser AG
CH-3362 Niederönz (CH)

(72) Erfinder: **Broger, David**
**3400 Burgdorf (CH)**

(74) Vertreter: **EGLI-EUROPEAN PATENT ATTORNEYS**
**Horneggstrasse 4**
**Postfach**
**8034 Zürich (CH)**

(54) **Vorrichtung zur Bestimmung der Position eines Laserstrahls mit einem Messmittel zur Erfassung einer durch den Laserstrahl induzierten Deformation**

(57) Die Vorrichtung zur Bestimmung der Position eines Laserstrahls (11) weist einen Körper (10.1) auf, welcher derart positionierbar ist, dass der Laserstrahl (11) mindestens teilweise auf den Körper (10.1) auftrifft. Ferner ist der Körper (10.1) bei Einwirkung des Laserstrahls (11) in Abhängigkeit von der räumlichen Verteilung der Intensität des Laserstrahls (11) deformierbar, wobei die Vorrichtung weiter umfasst: mindestens ein Messmittel (30.1), welches eine durch den Laserstrahl (11) induzierte Deformation (16) des Körpers (10.1) ortsabhängig erfasst, und eine Auswerteeinheit (50) zur Bestimmung eines Ortes (12), an dem die jeweils induzierte Deformation (16) maximal ist.

Fig. 1

**Beschreibung**

Die Erfindung bezieht sich auf eine Vorrichtung zur Bestimmung der Position eines Laserstrahls, wie sie beispielsweise in einer Anlage zur Bearbeitung von Werkstücken mit einem Laserstrahl eingesetzt wird.

Vorrichtungen zur Bestimmung der Position eines Laserstrahls sind beispielsweise aus dem Dokument US2002108939 bekannt. Dabei wird eine Gitterstruktur aus Messdrähten so positioniert, dass ein in seiner Position zu bestimmender Laserstrahl auf diese auftrifft. Der Laserstrahl erwärmt dabei die Messdrähte, wodurch sich deren elektrischer Widerstand verändert. Durch eine Messung der Widerstandsänderung an den Drähten lässt sich die Position des Laserstrahls bestimmen. Aufgrund der Gitterstruktur ist allerdings keine exakte Erfassung des Laserstrahls möglich. Falls nur eine geringe Anzahl von Messdrähten zur Bildung der Gitterstruktur verwendet werden, besteht die Möglichkeit, dass ein fokussierter Laserstrahl die Gitterstruktur passiert, ohne die Messdrähte zu streifen. Je grösser die Anzahl der Messdrähte ist, desto aufwendiger wird die Verdrahtung, da die einzelnen Messdrähte mit einer Messeinrichtung verbunden werden müssen, oder es bedarf einer aufwendigen Multiplexumschaltung, um den Widerstandswert jedes einzelnen Messdrahtes der Gitterstruktur auszumessen. Weiter ist eine feinmaschige Gitterstruktur mit entsprechend feinen Messdrähten, welche gegeneinander isoliert sein müssen, aufwendig und entsprechend teuer in der Herstellung. Ferner ist eine solche Gitterstruktur anfällig auf mechanische Belastungen. Ausserdem besteht die Gefahr, dass bei zu hoher Leistungsdichte des Laserstrahls die feinen Messdrähte zerstört werden.

Eine weitere Möglichkeit, die Position eines Laserstrahls zu bestimmen, besteht darin, in den Laserstrahl ein Messobjekt zu platzieren, welches sich bei Einwirkung des Laserstrahls dauerhaft verändert. Diese Veränderung kann beispielsweise eine Vertiefung, die Bildung eines Lochs oder eine Schwärzung sein. In einem weiteren Schritt kann nach dem Ausschalten des Lasers die Position der Veränderung auf dem Objekt ausgemessen und somit die Position des Laserstrahls bestimmt werden. Die Ausmessung der Position bedarf dabei manueller Eingriffe, welche zeitaufwändig sind und gegenüber automatisierten Prozessen hohe Kosten verursachen. Wegen der dauerhaften Veränderung der Oberfläche des Messobjekts muss dieses nach jedem oder nach wenigen Vorgängen ersetzt werden.

Der vorliegenden Erfindung liegt die Aufgabe zugrunde, die genannten Nachteile zu vermeiden und eine Vorrichtung zur Bestimmung der Position eines Laserstrahls zu schaffen, welche es ermöglicht, mit einfachen Mitteln und geringem Verdrahtungsaufwand die Position des Laserstrahls möglichst exakt zu erfassen.

Diese Aufgabe wird gelöst durch eine Vorrichtung mit den Merkmalen des Patentanspruchs 1.

Die Vorrichtung zur Bestimmung der Position eines Laserstrahls weist einen Körper auf, welcher derart positionierbar ist, dass der Laserstrahl mindestens teilweise auf den Körper auftrifft.

Erfindungsgemäss ist der Körper bei Einwirkung des Laserstrahls in Abhängigkeit von der räumlichen Verteilung der Intensität des Laserstrahls deformierbar, wobei die Vorrichtung weiter umfasst: mindestens ein Messmittel, welches eine durch den Laserstrahl induzierte Deformation des Körpers ortsabhängig erfasst, und eine Auswerteeinheit zur Bestimmung eines Ortes, an dem die jeweils induzierte Deformation maximal ist.

Der Körper wird durch die Einwirkung des Laserstrahls und die damit verbundene lokale Erwärmung deformiert. Die Deformation des Körpers (bezogen auf die Form des Körpers für den Fall, dass kein Laserstrahl einwirkt) ist maximal in der Umgebung des Punktes, an dem die Leistungsdichte des Laserstrahls maximal ist (im Folgenden Leistungsdichteschwerpunkt genannt). Ein Punkt auf dem Körper, an dem die vom Laserstrahl induzierte Deformation maximal ist, wird im Folgenden Deformationsschwerpunkt genannt. Die Deformation breitet sich über den gesamten Körper aus.

Durch Messmittel wird die Deformation des bestrahlten Körpers als Funktion des Ortes erfasst. Die Linearität der Deformation ist materialabhängig.

Auf der Grundlage von Messwerten, die von den Messmitteln bereitgestellt werden, wird mit Hilfe der Auswerteeinheit, beispielsweise mit einem mathematischen Algorithmus, der Ort, an dem die Deformation maximal ist, bestimmt. Eine Auswertung der Messwerte kann auch durch Extrapolation von Daten, die zuvor in Eichmessungen bestimmt wurden, erreicht werden. Dabei werden an die Vorrichtung relativ geringe Anforderungen gestellt. Insbesondere der Körper ist einfach in der Herstellung und robust in der Anwendung. Daraus resultiert eine kostengünstige Herstellung und eine lange Lebensdauer.

In einer Ausführungsform ist der Körper rotationssymmetrisch ausgestaltet und/oder besteht aus einem festen, homogenen Material, welches den Laserstrahl ganz oder teilweise absorbiert.

Ein festes, homogenes Material hat den Vorteil, dass sich die durch den Laserstrahl induzierte Leistung gleichmässig im Körper verteilt und sich der Körper gleichmässig deformiert. Die rotationssymmetrische Körperform vereinfacht die Auswertung der Messwerte. Somit kann je nach Messmittel mit einem relativ einfachen mathematischen Algorithmus die Position des Leistungsdichteschwerpunkts des Laserstrahls ermittelt werden. Ein vollständig absorbierender Körper hat den Vorteil, dass die gesamte Strahlungsenergie des Laserstrahls im Körper in Wärmeenergie umgewandelt wird, wodurch sich der Körper auch bei geringer Laserleistung relativ stark deformiert. Alternativ hat ein teilweise absorbierender Körper den Vorteil, dass die durch den Körper dringende Laserstrahlung für andere Anwendungen, beispielsweise in einer Laserbearbeitungsanlage, genutzt werden kann.

In einer alternativen Ausgestaltung ist der Körper ein transmissives Element, welches einen ersten Teil des Laserstrahls absorbiert und einen zweiten Teil des Laserstrahls reflektiert, teilreflektiert, aufweitet, bündelt oder unverändert passieren lässt. Der Absorptionsgrad des Laserstrahls im Körper kann auch veränderbar sein.

Dies hat den Vorteil, dass die Vorrichtung zur Bestimmung der Laserstrahlposition beispielsweise in ein transmissives Element wie bspw. ein Fenster, eine Linse oder einen Spiegel einer Laserbearbeitungsanlage integriert werden kann und sich die Position des Laserstrahls somit während des Betriebs der Laserbearbeitungsanlage überprüfen lässt. Mit einem Körper, welcher aus einem Material besteht, welches beispielsweise durch Anlegen einer Spannung den Absorptionsgrad verändert, kann ebenfalls während des Betriebs der Laserbearbeitungsanlage die Position des Laserstrahls überprüft werden.

In einer weiteren Ausführungsform umfasst das Messmittel mindestens drei Dehnmessstreifen, welche die Deformation in Form einer Ausdehnung erfassen und in Abständen am Körper befestigt sind.

Zur eindeutigen Bestimmung der Laserstrahlposition in der Fläche werden mindestens drei Messsensoren benötigt. Mit drei Messsensoren kann dabei eine besonders einfache Vorrichtung aufgebaut werden.

In einer weiteren Ausführungsform umfasst das Messmittel mindestens drei Dehnmessstreifen oder Messlaser, welche jeweils eine Ausdehnung des Körpers gegenüber jeweils einer Referenz erfassen und in Abständen am oder um den Körper befestigt sind.

Alternativ zur Ausdehnungsmessung am Körper, mit Messmitteln der ersten Ausführungsform, kann auch die Ausdehnung des Körpers gegenüber einer externen, nicht vom Laserstrahl beeinflussten Referenz erfasst werden. Mit Dehnmessstreifen oder Messlaser kann präzise und kostengünstig eine Ausdehnung des Körpers erfasst werden.

Alternativ ist der Körper drehbar angeordnet und das Messmittel umfasst mindestens einen Dehnmessstreifen, welcher am Körper befestigt ist.

Im vorliegenden Fall kann der Körper durch Drehen um eine Drehachse in verschiedene Winkelstellungen gebracht und für jede Winkelstellung die von den jeweiligen Dehnmessstreifen ermittelte Deformation bestimmt werden. Dies lässt auch eine Bestimmung der Position des Laserstrahls mit nur einem Dehnmessstreifen zu.

In einer weiteren Ausführungsform umfasst das Messmittel ein Interferometer oder ein Kraftmikroskop oder einen Körper aus doppelbrechendem Material. Mit derartigen Messmitteln ist ein ortsaufgelöstes Deformationsbild des durch den Laserstrahl deformierten Körpers erstellbar.

Auf dem Deformationsbild werden die Deformationen, welche der auftreffende Laserstrahl im Körper verursacht, sichtbar. Somit stellt das Deformationsbild direkt ein Abbild der Position des Laserstrahls auf dem Körper dar. Beim Interferometer sowie dem doppelbrechenden Material erfolgt die Bestimmung der grössten Deformation des Körpers mit einer Bildauswertungssoftware. Beim Kraftmikroskop wird die grösste Deformation des Körpers direkt durch Abtastung der Körperoberfläche ermittelt.

Die Auswerteeinheit umfasst in einer Ausführungsform mindestens eine Recheneinheit und eine Speichereinheit, wobei die Recheneinheit Messwerte der Messmittel auswertet. Die Messwerte werden insbesondere durch eine Signalverstärkung und/oder einen Nullabgleich der Messmittel aufbereitet. Das Verfahren, nach dem die Auswerteeinheit die Messwerte der Messmittel auswertet, hängt von der jeweiligen Ausführungsform der Messmittel ab. Die Auswerteeinheit bestimmt aus den Positionen der Messmittel sowie deren Messwerten den Deformationsschwerpunkt des Körpers. Abhängig von der Ausführungsform der Messmittel ist, sofern der Körper drehbar ist, der jeweilige Drehwinkel des Körpers mit zu berücksichtigen. Auch ist es möglich, dass die Messmittel ein Deformationsbild des Körpers liefern und die Auswerteeinheit durch eine Bildauswertung den Deformationsschwerpunkt des Körpers bestimmt.

Weitere Einzelheiten der Erfindung und insbesondere beispielhafte Ausführungsformen der erfindungsgemässen Vorrichtung werden im Folgenden anhand der beigefügten Zeichnungen erläutert. Es zeigen:

Fig. 1    eine perspektivische Darstellung einer ersten Aus- führungsform der erfindungsgemässen Vorrichtung zur Bestimmung der Position eines Laserstrahls, mit einem absorbierenden Körper, Messmittel und einer Auswerteeinheit;

Fig. 2a    den Körper gemäss Fig.1, wobei der Laserstrahl auf das Zentrum des Körpers gerichtet ist und der Kör- per im undeformierten Zustand und im deformierten Zustand dargestellt ist;

Fig. 2b    wie Fig. 2a, mit einem vom Zentrum versetzten De- formationsschwerpunkt;

Fig. 3a    eine Seitenansicht des Körpers mit zentralem De- formationsschwerpunkt;

Fig. 3b    wie Fig. 3a mit einem vom Zentrum versetzten De- formationsschwerpunkt;

Fig. 4    eine perspektivische Darstellung einer zweiten Ausführungsform der erfindungsgemässen Vorrich- tung, mit Messmitteln, welche die Deformation des Körpers gegenüber einer Referenz erfassen;

Fig. 5     eine Frontansicht einer weiteren Ausführungsform, mit vier Messlasern, welche die Ausdehnung des Körpers erfassen;

Fig. 6     eine perspektivische Darstellung eines zweiten Körpers in der Form eines transmissiven Elements, an dessen Mantelfläche Messsensoren angeordnet sind;

Fig. 7a     einen Spiegel in einer Seitenansicht;

Fig. 7b     einen Spiegel in einer Seitenansicht mit einem für einen Laserstrahl durchlässigen Element vor der Spiegelfläche;

Fig. 8     eine Seitenansicht einer dritten Ausführungsform der erfindungsgemässen Vorrichtung zur Erfassung der Deformation des Körpers mit einem Interferome- ter;

Fig. 9     eine Seitenansicht einer vierten Ausführungsform der erfindungsgemässen Vorrichtung mit einem Kraftmikroskop zur Erfassung der Deformation des Körpers;

Fig. 10     eine Seitenansicht einer fünften Ausführungsform der erfindungsgemässen Vorrichtung mit einem Kör- per aus einem doppelbrechenden Material;

Fig. 11a     eine mögliche Anordnung von drei Messmitteln an der Mantelfläche des Körpers;

Fig. 11b     eine weitere Anordnung der Messmittel;

Fig. 12     eine Variante der Anordnung der Messmittel an ei- nem drehbaren Körper;

Fig. 13     eine Seitenansicht eines drehbaren Körpers mit ei- nem stabförmigen Strahlscanner;

Fig. 14     eine Frontansicht auf den Körper mit verstärkter Mantelfläche;

Fig. 15a     eine Frontansicht auf den Körper mit einem Defor- mationsschwerpunkt;

Fig. 15b     Grafik einer Messreihe für den Körper gemäss Fig. 15a.

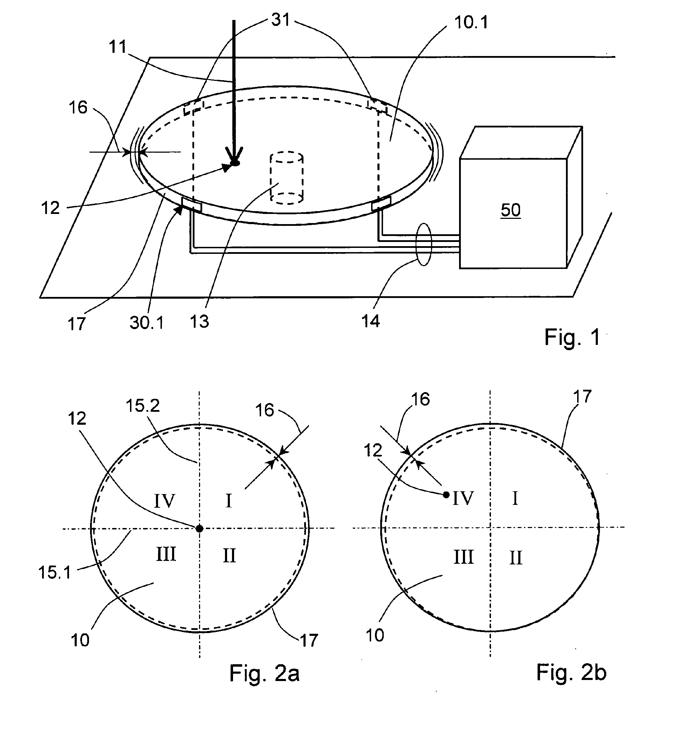

Figur 1 zeigt eine perspektivische Darstellung einer erfindungsgemässen Vorrichtung zur Bestimmung der Position eines Laserstrahls 11, mit einem Körper 10.1, einem Messmittel 30.1 und einer Auswerteeinheit 50. Die Auswerteeinheit 50 und das Messmittel 30.1 sind über Verbindungskabel 14 miteinander verbunden. Der Körper 10.1 besteht aus einem Material, welches den Laserstrahl 11 ganz oder teilweise absorbiert. Die Photonen des Laserstrahls 11 werden beim Auftreffen auf den Körper 10.1 in thermische Energie umgewandelt. Der Laserstrahl 11 kann hierbei in einem beliebigen Einfallswinkel auf den Körper 10.1 auftreffen.

Die thermische Energie führt lokal zu einer Deformation 16 des Körpers 10.1. Die maximale Deformation 16 und damit ein Deformationsschwerpunkt 12 ergibt sich an der Stelle, an welcher der Laserstrahl 11 mit der grössten Leistungsdichte und damit mit dem maximalen Photonenstrom auftrifft. Dabei kann es zu einer Sekundäremission von Photonen anderer Wellenlängen aufgrund der Temperatur des Körpers 10.1 kommen.

Ausgehend vom Deformationsschwerpunkt 12 breitet sich die Deformation 16 im Körper aus. Diese Deformation 16 wird von dem Messmittel 30.1 registriert. Das Messmittel 30.1 umfasst in der Darstellung von Figur 1 vier Dehnmessstreifen 31. Die Dehnmessstreifen 31 sind in Abständen am Körper 10.1 befestigt und registrieren die Deformation des Körpers 10.1 an dem Ort, an welchem sie befestigt sind. Über die Verbindungskabel 14 werden die Messwerte von den Dehnmessstreifen 31 an die Auswerteeinheit 50 übermittelt. Die Auswerteeinheit 50 wertet die von den Dehnmessstreifen 31 erfassten Messwerte aus.

Bei der Auswertung der Dehnmessstreifen 31 durch die Auswerteeinheit 50 werden mehrere Grössen berücksichtigt. Je nach Anzahl und Position der Dehnmessstreifen 31 ist eine einfachere beziehungsweise eine genauere Positionsbestimmung des Laserstrahls 11 möglich. In Versuchen haben sich rotationssymmetrische Scheiben als Körper 10.1, an deren Mantelfläche 17 in regelmässigem Abstand von 90° vier Dehnmessstreifen 31 befestigt sind, als besonders vorteilhaft gezeigt. Dies lässt mit einem geringem Aufwand, sowie mit einfachen mathematischen Algorithmen, welche im Folgenden noch erläutert werden, eine exakte Positionsbestimmung des Laserstrahls 11 zu.

Um eine grosse Genauigkeit der Positionsbestimmung zu erreichen, ist eine rotationssymmetrische Befestigung 13 des Körpers 10.1 von Vorteilen. Fehler, die dennoch durch die Befestigung 13 verursacht werden, können beim Auswerten der Messwerte berücksichtigt werden.

Die Figuren 2a und 2b zeigen einen Körper 10 welcher durch die Einwirkung des Laserstrahls 11 deformiert ist, in einer Frontansicht. Die Ausbreitungsrichtung des Laserstrahls 11 liegt dabei in der Betrachtungsrichtung. Figur 2a zeigt einen Deformationsschwerpunkt 12 im Zentrum des Körpers 10 auf dem Nullpunkt der X-Achse 15.1 und der Y-Achse 15.2. Die gestrichelte Linie zeigt dabei den Körper 10 in einem ersten Zustand ohne Einwirkung eines Laserstrahls. Die durchgezogene Linie zeigt den Körper 10 in einem zweiten Zustand unter Einwirkung des Laserstrahls 11. Als Deformation 16 wird der Unterschied zwischen diesen beiden Zuständen bezeichnet.

Der Körper 10 besteht aus einem festen Material mit einem möglichst grossen, möglichst linearen

Temperaturausdehnungskoeffizienten. Als besonders geeignet haben sich dabei Metalle wie beispielsweise Aluminium oder Kupfer gezeigt. Bei einer rotationssymmetrischen Befestigung führt dies zu einer gleichförmigen Deformation 16 in allen vier Quadranten des Körpers 10. Der Zustand ohne Deformationsschwerpunkt 12 wird durch die gestrichelte Linie dargestellt. In Figur 2b ist der Deformationsschwerpunkt 12 des Körpers im IV-Quadranten des Körpers 10. Dies führt an der Mantelfläche 17 des Körpers 10 zu einer Deformation 16 gegenüber dem mit einer gestrichelten Linie dargestellten Zustand ohne Deformationsschwerpunkt 12. In dieser Darstellung wird sichtbar, dass die Ausdehnung an der Mantelfläche 17 abhängig ist von der Position des Deformationsschwerpunkts 12. Besonders ausgeprägt ist die Ausdehnung im IV-Quadranten. Der I- und III-Quadrant erfahren an ihrer Mantelfläche 17 eine etwa gleich starke Deformation. Am geringsten ist die Deformation im II-Quadranten. In bestimmten Fällen kann gar eine negative Deformation 16 resultieren.

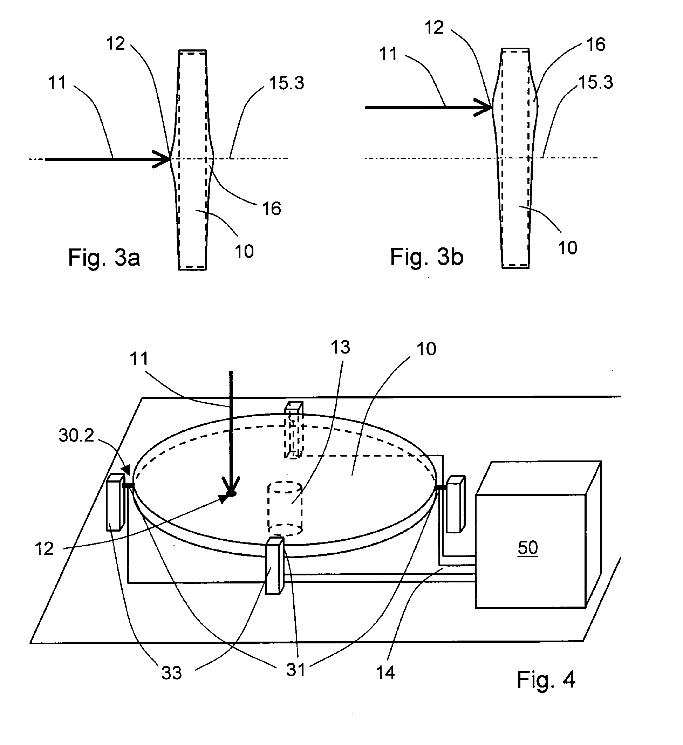

Figur 3a und 3b zeigen einen Körper 10 mit einem Deformationsschwerpunkt 12 in der Seitenansicht. Der Laserstrahl 11 befindet sich bei der Figur 3a auf der Z-Achse 15.3 und bei Figur 3b in der oberen Hälfte des Körpers 10. Die beiden Figuren zeigen, dass der Körper 10 auch in der Ausbreitungsrichtung des Laserstrahls 11 eine Deformation 16 erfährt. Besonders ausgeprägt ist die Deformation 16 am Deformationsschwerpunkt 12. Abhängig von der Materialstärke d des Körpers 10 in der Ausbreitungsrichtung des Laserstrahls 11 und der Eindringtiefe des Laserstrahls 11 ist auch auf der Rückseite eine Deformation 16 feststellbar. Die Form der Deformation 16 des Körpers 10 hängt vom Material sowie der Geometrie des Körpers 10 ab und muss nicht der gezeigten Deformation 16 entsprechen.

Figur 4 zeigt eine perspektivische Darstellung mit Messmittel 30.2 einer zweiten Ausführungsform der erfindungsgemässen Vorrichtung, welche die Deformation des Körpers 10 gegenüber einer Referenz 33 erfassen. Die Referenz 33 befindet sich bei derartigen Vorrichtungen nicht direkt am Körper 10 und wird nicht vom Laserstrahl 11 bestrahlt. Zwischen der Referenz 33 und dem Körper 10 werden Längenmessungen an mehreren verschiedenen Orten durchgeführt. Besonders bewährt zur Längenmessung haben sich dabei Dehnmessstreifen 31 oder Messlaser. Die Längenmessung liefert einen Wert für die Deformation des Körpers 10 am jeweiligen Ort relativ zur Referenz 33. Über Verbindungskabel 14 werden die Messwerte an die Auswerteeinheit 50 übermittelt und ausgewertet. Es ist auch möglich den Körper 10 ohne Befestigung 13 beispielsweise direkt an den Dehnmessstreifen 31 aufzuhängen.

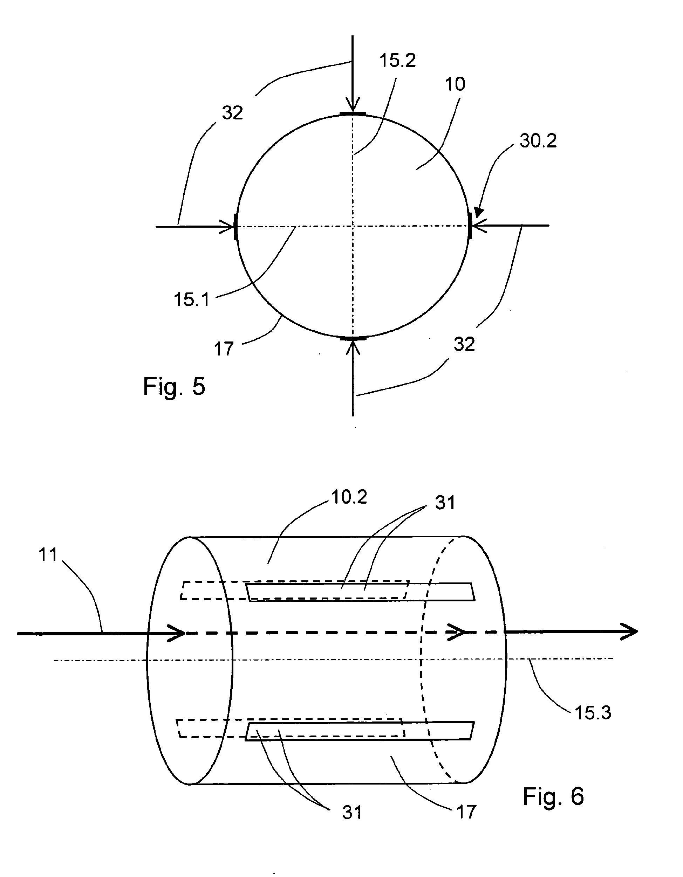

Figur 5 zeigt eine Frontansicht auf Messmittel 30.2 der zweiten Ausführungsform mit vier Messlasern 32, welche die Ausdehnung des Körpers 10 erfassen. Die Messlaser 32 werden dabei vorzugsweise in einem regelmässigen Abstand auf Punkten an der Mantelfläche 17 des Körpers 10 gerichtet.

Figur 6 zeigt eine perspektivische Darstellung eines transmissiven Körpers 10.2 in der Form eines transmissiven Elements, an dessen Mantelfläche 17 Messmittel in Form von Dehnmessstreifen 31 angeordnet sind. Transmissive Elemente wie beispielsweise Fenster, Linsen oder dichroitische- oder teildurchlässige Spiegel, werden in der Lasertechnik häufig eingesetzt. Sie ermöglichen beispielweise das Auskoppeln des gesamten, oder eines Teils des Laserstrahls 11.

Die Dehnmessstreifen 31 können in verschiedener Art ausgerichtet sein. In der Figur 1 wird eine Ausrichtung entlang des Umfangs der Mantelfläche 17 des Körpers 10.1 gezeigt. Figur 6 zeigt eine weitere Anordnung der Dehnmessstreifen 31 an der Mantelfläche 17 in der Ausbreitungsrichtung des Laserstrahls 11.

Damit der zweite Körper 10.2 eine Deformation erfährt, muss mindestens ein Teil des Laserstrahls 11 vom transmissiven Körper 10.2 absorbiert werden und dabei eine Deformation des transmissiven Körpers 10.2 bewirken. Der transmissive Körper 10.2 kann auch in der Art gestaltet sein, dass sein Absorptionsgrad veränderbar ist. Beispielsweise kann bei gewissen Materialien durch Anlegen einer elektrischen Spannung die Lichtdurchlässigkeit und damit der Absorptionsgrad verändert werden.

Ein in Figur 6 gezeigtes transmissives Element kann direkt in eine Laseranlage integriert werden. Dadurch ist es möglich, die Position des Laserstrahls 11 während des Betriebs der Laseranlage zu bestimmen, bzw. zu überwachen.

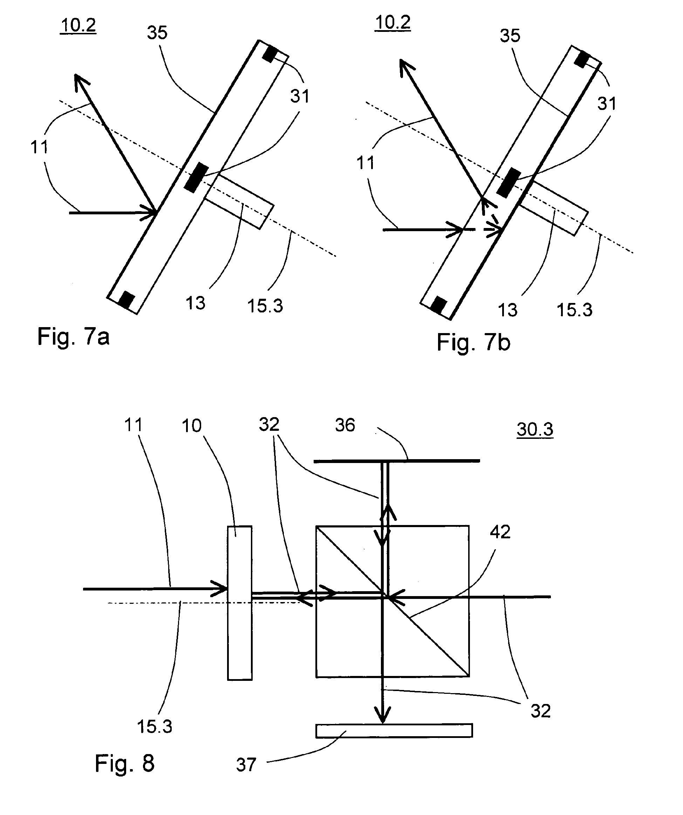

Figur 7a zeigt einen transmissiven Körper 10.2 als Spiegel 35 in einer Seitenansicht, an welchem der Laserstrahl 11 reflektiert wird. Der absorbierte Teil des Laserstrahls 11 führt zu einem Deformationsschwerpunkt, welcher mit den Dehnmessstreifen 31 detektiert wird. Figur 7b zeigt einen weiteren Spiegel 35, welcher hinter einem laserdurchlässigen Material angebracht ist. Dabei absorbiert das laserdurchlässige Material einen Teil der Laserleistung. Dies führt wiederum zu einer Deformation, welche mit den Dehnmessstreifen 31 erfassbar ist.

Figur 8 zeigt eine Seitenansicht einer dritten Ausführungsform der erfindungsgemässen Vorrichtung zur Erfassung der Deformation des Körpers 10 mit einem Interferometer 37. In der gezeigten Ausführung wird die Rückseite des Körpers 10, auf welchen der Laserstrahl 11 auftrifft, mit einem Interferometer 37 als Messmittel der dritten Ausführungsform 30.3 vermessen. Dabei wird beispielsweise ein Messlaser 32 auf einen halbdurchlässigen Spiegel 42 gerichtet. Der Strahl des Messlasers 32 wird dabei zur Hälfte von dem zu vermessenden Körper 10 und zur Hälfte von einer Referenzfläche 36 reflektiert. Die beiden überlagerten Teilstrahlen ergeben ein ortsaufgelöstes Deformationsbild der Oberfläche des Körpers 10, welches von der Auswerteeinheit beispielsweise mit einer Bildauswertesoftware zur Bestimmung des Ortes, an welchem die Deformation maximal ist, ausgewertet werden kann.

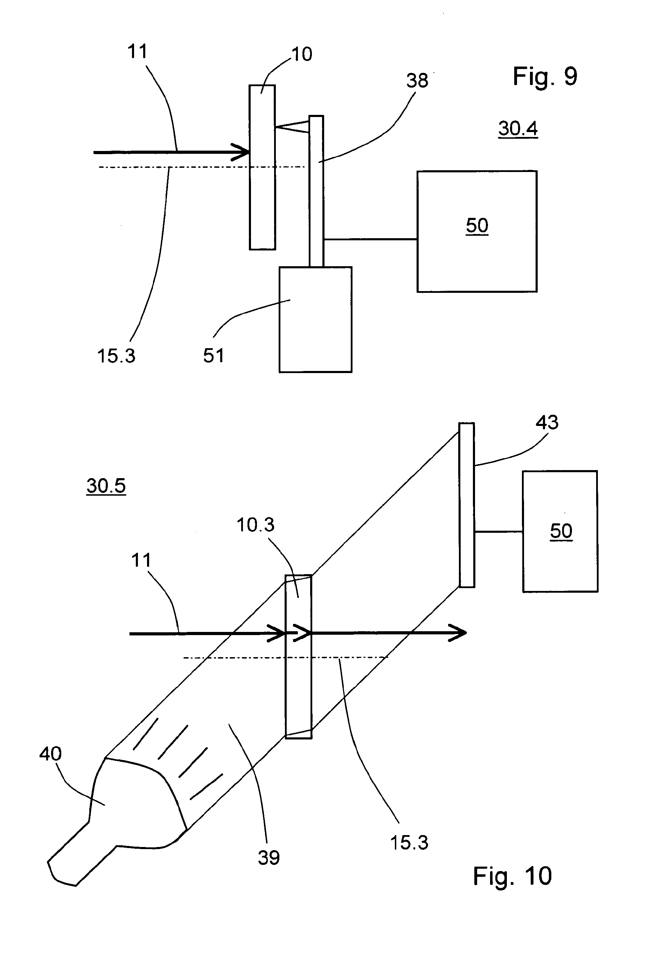

Figur 9 zeigt eine Seitenansicht mit einer vierten Ausführungsform der erfindungsgemässen Vorrichtung zur Erfassung der Deformation des Körpers 10 mit einem Kraftmikroskop 38. In der gezeigten Ausführung wird wiederum die Rückseite des Körpers 10, auf welchen der Laserstrahl 11 auftrifft, vermessen. Das Kraftmikroskop 38 als Messmittel der vierten Ausführungsform 30.4 liefert ortsaufgelöste Werte über die Deformation des Körpers 10. Das Kraftmikroskop 38 und eine zugehörige Steuereinheit 51 sind mit der Auswerteeinheit 50 verbunden. Dadurch kann der Ort der maximalen Deformation bestimmt werden.

Figur 10 zeigt eine Seitenansicht mit einer fünften Ausführungsform der Messmittel 30.5 zur Erfassung der Position eines Laserstrahls 11. Der in Figur 10 gezeigte doppelbrechende Körper 10.3 verändert aufgrund der Einwirkung des Laserstrahls 11 seine doppelbrechenden Eigenschaften. Eine Lichtquelle 40 erzeugt ferner einen Lichtstrahl 39, welcher den doppelbrechenden Körper 10.3 durchquert und auf einem Bildsensor 43 ein ortsaufgelöstes Deformationsbild erzeugt. Die Auswerteeinheit 50 wertet diese beispielsweise mit einer Bildauswertesoftware zur Bestimmung des Ortes, an welchem die Deformation maximal ist, aus.

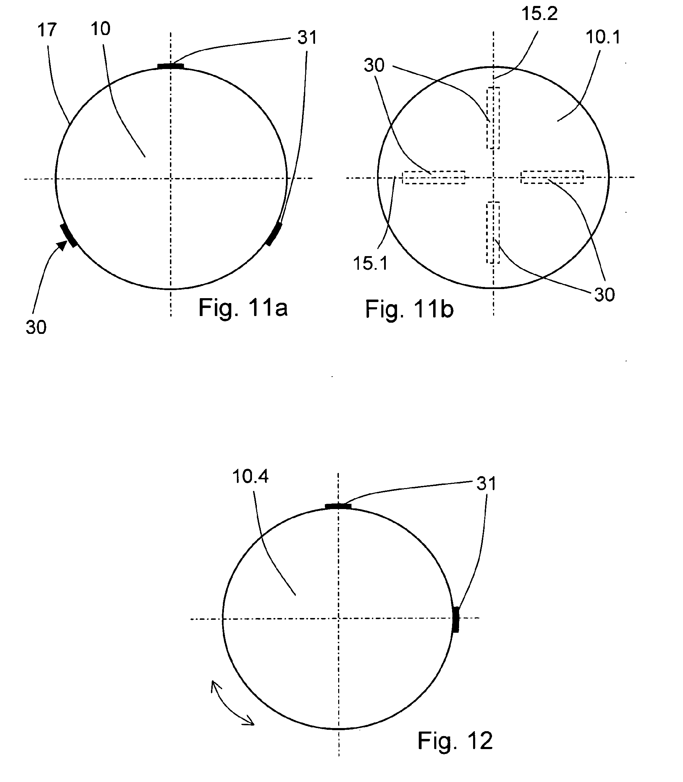

Figur 11a zeigt eine weitere mögliche Anordnung der Messmittel 30 an der Mantelfläche 17 des Körpers 10. Um die Position des Laserstrahls eindeutig bestimmen zu können, müssen mindestens drei Dehnmessstreifen 31 oder Messlaser an einem Körper 10 angeordnet, beziehungsweise die Deformationen an drei Punkten am Körper 10 gemessen werden. Der mathematische Algorithmus zur Berechnung des Deformationsschwerpunktes ist dabei an die Anzahl und die Position der Messmittel 30 anzupassen.

Figur 11b zeigt Messmittel 30, welche auf der dem Laserstrahl abgewandten Seite des ersten Körpers 10.1 angeordnet sind.

Figur 12 zeigt eine Ausführungsform der Anordnung der Dehnmessstreifen 31 bei einem drehbaren Körper 10.4. Die drehbare Befestigung des Körpers 10.4 ermöglicht die Positionsbestimmung des Laserstrahls mit weniger als drei Dehnmessstreifen 31. Durch eine Drehung des Körpers 10.4 kann die Anordnung des Dehnmessstreifens bezüglich einem auf den Körper 30.4 treffenden Laserstrahl verändert werden und die Deformation des Körpers für verschiedene Winkelstellungen des Körpers 10.4 gemessen werden.

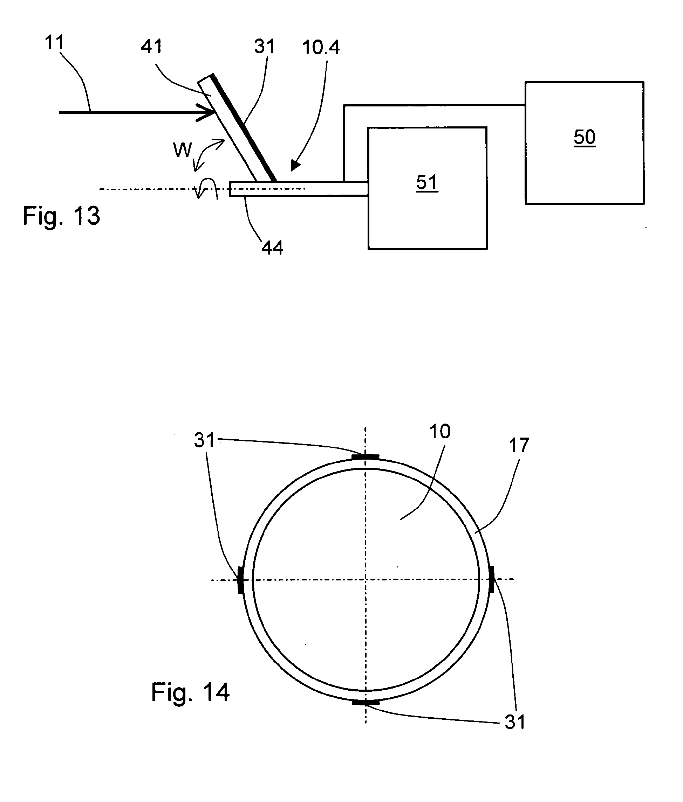

Figur 13 zeigt eine Seitenansicht eines drehbaren Körpers 10.4 zur Bestimmung der Position eines Laserstrahls 11 mit einem stabförmigen Strahlscanner 41. Bei dem in Figur 13 gezeigten Ausführungsbeispiel trifft der Laserstrahl 11 auf den stabförmigen Strahlscanner 41. Der stabförmige Strahlscanner 41 rotiert dabei um eine drehbare Achse 44. Auf der Rückseite des Strahlscanners 41 befindet sich ein Dehnmessstreifen 31, welcher die durch den Laserstrahl 11 induzierte Deformation des Strahlsscanners 41 ortsabhängig erfasst. Um die Position des Laserstrahls 11 auf dem stabförmigen Strahlscanner 41 zu bestimmen, kann beispielsweise zusätzlich zur Rotation der Winkel W verändert werden, um das Auftreffen des Laserstrahls 11 zu beeinflussen. Die Steuereinheit 51 steuert die Rotation sowie den Winkel W des Strahlscanners 41. Die Auswerteeinheit 50 ermittelt die Position des Laserstrahls 11 anhand der Messwerte und der Steuerwerte und bestimmt den Ort, an welchem die Deformation maximal ist.

Figur 14 zeigt einen Körper 10 mit einer gegenüber dem Zentrum verstärkten Mantelfläche 17. Dadurch wird unter anderem die Wärmekapazität des Körpers 10 klein gehalten, wodurch schnelle Messvorgänge ermöglicht werden. Dabei hat sich eine Materialstärke d des Körpers 10 in der Ausbreitungsrichtung des Laserstrahls von 1 bis 10mm als vorteilhaft gezeigt. Um beispielsweise Dehnmessstreifen 31 am Körper 10 zu befestigen, kann die Mantelfläche 17 des Körpers 10 entsprechend breiter und/oder aus einem anderen Material gewählt werden.

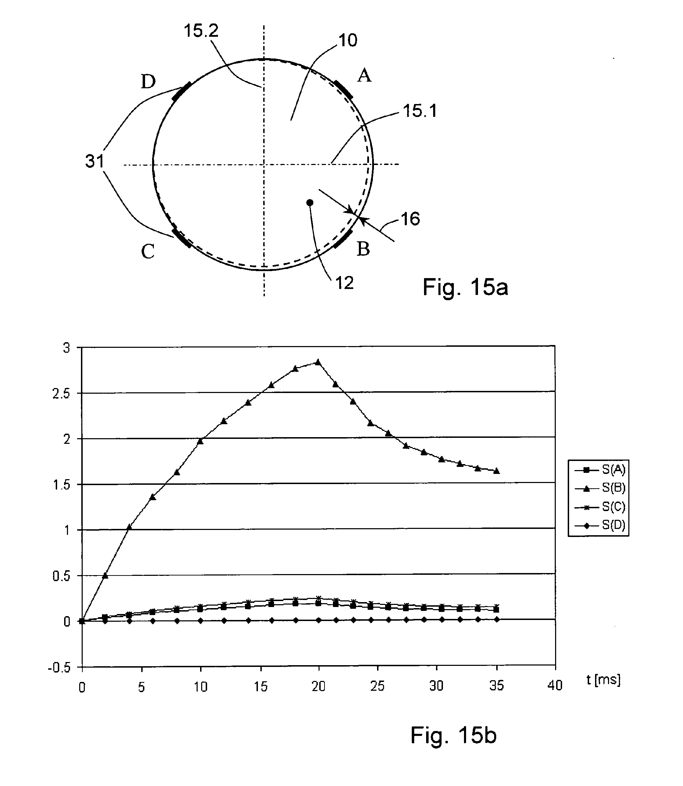

Figur 15a zeigt eine Frontansicht auf den Körper 10 mit einem Deformationsschwerpunkt 12, welcher sich in der Nähe des Dehnmessstreifens B befindet. Durch die Nähe zum Deformationsschwerpunkt 12 resultiert im Bereich des Dehnmessstreifen B eine entsprechend starke Deformation 16 des Körpers 10. Dies zeigt sich im Messwert S(B) des Dehmessstreifen B, welcher in der Grafik der Figur 15b entsprechend ausgeprägt ist. Die Dehnmessstreifen A und C liefern einen beinahe identischen Messwert S(A), S(C), während der Dehnmessstreifens D, welcher am entferntesten zum Deformationsschwerpunkt 12 angeordnet ist, die geringsten Deformation 16 misst.

Durch thermische Effekte im Körper 10, welche von der Laserleistung und der Einwirkzeit abhängen, kann eine Veränderung der Messwerte der Dehnmessstreifen A, B, C und D festgestellt werden. Bei der Auswertung der Messwerte und der Bestimmung des Deformationsschwerpunktes 12 müssen diese Effekte berücksichtigt werden.

Die Auswerteeinheit bestimmt anhand der in Figur 15b dargestellten Messwerte S(A), S(B), S(C), S(D) den Deformationsschwerpunkt 12. Dabei können verschiedene mathematische Algorithmen zur Anwendung kommen. Die folgende Formel zeigt, wie der Deformationsschwerpunkt 12 aufgrund der Messwerte S(A), S(B), S(C), S(D) der Dehnmessstreifen A, B, C, D bestimmt werden kann. Die Ergebnisse X und Y zeigen die Position des Deformationsschwerpunktes 12 auf der X-Achse 15.1 und der Y-Achse 15.2 eines Einheitskreises und müssen entsprechend mit dem Kreisradius multipliziert werden.

$$X = \frac{(S(A) + S(B)) - (S(D) + S(C))}{S(A) + S(B) + S(C) + S(D)}$$

$$Y = \frac{(S(A) + S(D)) - (S(B) + S(C))}{S(A) + S(B) + S(C) + S(D)}$$

**Patentansprüche**

1. Vorrichtung zur Bestimmung der Position eines Laserstrahls (11),
   mit einem Körper (10, 10.1, 10.2, 10.3, 10.4), welcher derart positionierbar ist, dass der Laserstrahl (11) mindestens teilweise auf den Körper (10, 10.1, 10.2, 10.3, 10.4) auftrifft,
   **dadurch gekennzeichnet, dass**
   der Körper (10, 10.1, 10.2, 10.3, 10.4) bei Einwirkung des Laserstrahls (11) in Abhängigkeit von der räumlichen Verteilung der Intensität des Laserstrahls (11) deformierbar ist und
   die Vorrichtung weiter umfasst:
   mindestens ein Messmittel (30, 30.1, 30.2, 30.3, 30.4, 30.5), welches eine durch den Laserstrahl (11) induzierte Deformation (16) des Körpers (10, 10.1, 10.2, 10.3, 10.4) ortsabhängig erfasst, und
   eine Auswerteeinheit (50) zur Bestimmung eines Ortes (12), an dem die jeweils induzierte Deformation (16) maximal ist.

2. Vorrichtung nach Anspruch 1 **dadurch gekennzeichnet, dass** der Körper (10, 10.1, 10.2, 10.3, 10.4) rotationssymmetrisch ausgestaltet ist und/ oder aus einem festen, homogenen Material besteht, welches den Laserstrahl (11) ganz oder teilweise absorbiert.

3. Vorrichtung nach Anspruch 1 bis 2, **dadurch gekennzeichnet, dass** der Körper (10.2) ein transmissives Element ist und einen ersten Teil des Laserstrahls (11) absorbiert und einen zweiten Teil des Laserstrahls (11) reflektiert, teilreflektiert, aufweitet, bündelt oder der zweite Teil des Laserstrahls (11) den Körper (10.2) unverändert passiert.

4. Vorrichtung nach Anspruch 1 bis 2, **dadurch gekennzeichnet, dass** der Absorptionsgrad des Laserstrahls (11) im Körper (10.2) veränderbar ist.

5. Vorrichtung nach einem der Ansprüche 1 bis 4, **dadurch gekennzeichnet, dass** das Messmittel (30.1) mindestens drei Dehnmessstreifen (31) umfasst, welche die Deformation (16) in Form einer Ausdehnung erfassen und in Abständen am Körper (10.1, 10.2) befestigt sind.

6. Vorrichtung nach einem der Ansprüche 1 bis 4, **dadurch gekennzeichnet, dass** das Messmittel (30.2) mindestens drei Dehnmessstreifen (31) oder Messlaser (32) umfasst, welche jeweils eine Ausdehnung des Körpers (10.1, 10.2) gegenüber jeweils einer Referenz (33) erfassen und in Abständen am oder um den Körper (10.1, 10.2) befestigt sind.

7. Vorrichtung nach einem der Ansprüche 1 bis 4, **dadurch gekennzeichnet, dass** der Körper (10.4) drehbar angeordnet ist und das Messmittel (30.1) mindestens einen Dehnmessstreifen (31) umfasst, welcher an dem Körper (10.4) befestigt ist.

8. Vorrichtung nach einem der Ansprüche 1 bis 4, **dadurch gekennzeichnet, dass** das Messmittel (30.3) ein Interferometer (37) umfasst, durch welches ein ortsaufgelöstes Deformationsbild des durch den Laserstrahl (11) deformierten Körpers (10.1) erstellbar ist.

9. Vorrichtung nach einem der Ansprüche 1 bis 4, **dadurch gekennzeichnet, dass** das Messmittel (30.4) ein Kraftmikroskop (38) umfasst, durch welches ein ortsaufgelöstes Deformationsbild des durch den Laserstrahl (11) deformierten Körpers (10.1) erstellbar ist.

10. Vorrichtung nach einem der Ansprüche 1 bis 4, **dadurch gekennzeichnet, dass** der Körper (10.3) aus einem doppelbrechenden Material besteht, wobei die Grösse der Doppelbrechung von der durch den Laserstrahl (11) induzierten Deformation abhängig ist, und das Messmittel (30.5) ein Mittel zur ortsaufgelösten Abbildung der Doppelbrechung des Körpers (10.3) ist.

11. Vorrichtung nach einem der Ansprüche 1 bis 10, **dadurch gekennzeichnet, dass** die Auswerteeinheit (50) mindestens eine Recheneinheit und eine Speichereinheit umfasst, und die Recheneinheit Messwerte der Messmittel (30, 30.1, 30.2, 30.3, 30.4, 30.5) auswertet.

12. Vorrichtung nach einem der Ansprüche 5, 6 oder 9 **dadurch gekennzeichnet, dass** durch die Auswerteeinheit (50) aus der Position der Messmittel (30.1, 30.2, 30.4) und deren Messwerten ein Deformationsschwerpunkt (12) des Körpers (10.1, 10.2) bestimmbar ist.

13. Vorrichtung nach Anspruch 7, **dadurch gekennzeichnet, dass** durch die Auswerteeinheit (50) aus der Position der Messmittel (30.1), deren Messwerten und dem Drehwinkel der Deformationsschwerpunkt (12) des Körpers (10.4) bestimmbar ist.

14. Vorrichtung nach einem der Ansprüche 8, 9 oder 10, **dadurch gekennzeichnet, dass** durch die Auswerteeinheit (50) mittels einer Bildauswertung der Messmittel (30.3, 30.4, 30.5) der Deformationsschwerpunkt (12) des Körpers (10.1, 10.2, 10.3) bestimmbar ist.

Fig. 1

Fig. 2a

Fig. 2b

Fig. 3a

Fig. 3b

Fig. 4

Fig. 5

Fig. 6

Fig. 7a

Fig. 7b

Fig. 8

Fig. 9

30.4

Fig. 10

30.5

Fig. 11a

Fig. 11b

Fig. 12

Fig. 13

11    41    31    10.4

W

44    51    50

Fig. 14

31    10    17

31

31

Fig. 15a

Fig. 15b

EP 2 145 720 A1

Europäisches
Patentamt
European
Patent Office
Office européen
des brevets

**EUROPÄISCHER RECHERCHENBERICHT**

Nummer der Anmeldung

EP 08 40 5173

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 886 352 A (NIPPON ASPHERICAL LENS CO LTD ET AL) 23. Dezember 1998 (1998-12-23) * Spalte 7, Zeile 11 - Spalte 9, Zeile 16; Abbildung 1 * ----- | 1,8,14 | INV. B23K26/04 G01B11/26 G01B7/16 G01B5/30 |
| Y,D | US 2002/108939 A1 (J. MAYER) 15. August 2002 (2002-08-15) * Zusammenfassung; Ansprüche; Abbildungen * ----- | 1-3,5,6, 11,12 | |
| Y | US 4 864 864 A (D.P. YALE ET AL) 12. September 1989 (1989-09-12) * Spalte 1, Zeilen 7-49; Abbildungen 1,2 * ----- | 1-3,5,6, 11,12 | |
| A | US 4 618 759 A (G. MUELLER ET AL) 21. Oktober 1986 (1986-10-21) * Spalte 3, Zeile 60 - Spalte 4, Zeile 19; Abbildungen 1,4 * ----- | 1 | |
| A | US 4 344 172 A (G. BUSSE) 10. August 1982 (1982-08-10) * Spalte 2, Zeile 54 - Spalte 3, Zeile 58; Abbildung 3 * ----- | 1 | RECHERCHIERTE SACHGEBIETE (IPC) B23K G01B G01G G07B G01K |

Der vorliegende Recherchenbericht wurde für alle Patentansprüche erstellt

| Recherchenort | Abschlußdatum der Recherche | Prüfer |
|---|---|---|
| München | 11. Dezember 2008 | Jeggy, Thierry |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 08 40 5173

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-12-2008

| Im Recherchenbericht angeführtes Patentdokument | | Datum der Veröffentlichung | Mitglied(er) der Patentfamilie | | Datum der Veröffentlichung |
|---|---|---|---|---|---|
| EP 0886352 | A | 23-12-1998 | WO | 9733352 A1 | 12-09-1997 |
| | | | JP | 3877009 B2 | 07-02-2007 |
| | | | US | 6255619 B1 | 03-07-2001 |
| US 2002108939 | A1 | 15-08-2002 | KEINE | | |
| US 4864864 | A | 12-09-1989 | KEINE | | |
| US 4618759 | A | 21-10-1986 | CA | 1233049 A1 | 23-02-1988 |
| | | | DE | 3406677 A1 | 05-09-1985 |
| | | | EP | 0154866 A1 | 18-09-1985 |
| | | | JP | 60200219 A | 09-10-1985 |
| US 4344172 | A | 10-08-1982 | KEINE | | |

EPO FORM P0461

Für nähere Einzelheiten zu diesem Anhang : siehe Amtsblatt des Europäischen Patentamts, Nr.12/82

**EP 2 145 720 A1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2002108939 A